# NEW EUROPEAN PATENT SPECIFICATION

(11) **EP 0 796 559 B2**
(45) Date of publication and mention of the opposition decision: **01.03.2006**
(45) Mention of the grant of the patent: 12.06.2002
(21) Application number: 97200681.1
(22) Date of filing: 10.03.1997
(51) Int. Cl.: A21D 8/04

(54) **A novel enzyme combination**
Kombination von Enzymen
Combinaison d'enzymes

(30) Priority: 19.03.1996 EP 96200760
(43) Date of publication of application: 24.09.1997
(73) Proprietor: DSM IP Assets B.V., 6411 TE Heerlen (NL)
(72) Inventor: Souppe, Jèrôme, 59290 Wasquehal (FR); Naeye, Thierry Jean-Bernard, 59390 Touffiers (FR)
(74) Representative: Matulewicz, Emil Rudolf Antonius

(56) References cited:
- EP-A- 0 588 426
- WO-A-94/28727
- WO-A-94/28729
- WO-A-95/01727
- CA-A- 2 157 718
- GB-A- 375 342
- GB-A- 464 857
- US-A- 3 650 764
- PATENT ABSTRACTS OF JAPAN vol. 013, no. 255 (C-606), 13 June 1989 & JP 01 060693 A (AMANO PHARMACEUT. CO. LTD.), 7 March 1989,
- DATABASE WPI Section Ch, Week 8224 Derwent Publications Ltd., London, GB; Class D13, AN 82-49126e XP002012297 & JP 57 074 076 A (ASAHI DENKA KOGYO) , 10 May 1982

## Description

The present invention relates to a composition comprising an enzyme which produces an oxidising agent and a protease which is inactivated by that agent. Such compositions find use in doughs for baking.

Metabisulfite is currently used in the baking industry to soften doughs. In particular, sulfite is used in the biscuit industry to reduce shrinking of dough pieces and irregular sizing of baked products. Doughs contain as a minimum flour and water although they may well of course contain yeast, sugar, enzymes, sodium bicarbonate etc. Sulfite is thought to react with gluten proteins in a way that prevents them from forming inter covalent S-S bridges (C.E. Stauffer (1994), The Science of Cookie and Cracker Production ed. by Hamed Faridi, Chapman & Hall New York London, Chapter 6. p. 237-238). The effect of sulfite in dough is almost immediate and results in an inextensible and inelastic dough. Sulfite also activates wheat proteases which enhances the breakdown of the gluten structure (H.S. Olcott, L. A. Sapirstein, M.J. Blish, Cereal Chem. (1943) 20 (1), 87-97). Cysteine and glutathione were also shown to have similar effects (C.O. Swanson, A.C. Andrews, Cereal Chem. (1945) 22 (3), 134-149).

Papain was one of the first enzymes applied to wheat gluten modification (C.O. Swanson, A.C. Andrews, Cereal Chem. (1945) 22 (3), 134-149; R.H. Harris, J. Jr Johnson, Cereal Chem. (1940) 17 (3), 203-222). The use of microbial proteases has been also described in many patents: US Patent 3,157,513, US Patent 1,377,798, US Patent 4,100,151, UK Patent 2007960, and German Patent Application DE 3003679 A1. Microbial proteases may be combined with porcine pancreas enzymes as described in EP 0384303. Partial enzymatic hydrolysis of wheat gluten has also been described using proteases from *Thermoactinomyces vulgaris* as described in M. Friedrich, J. Noack, R. Noack, Die Nahrung (1982) 26 (9) 811-822; J.I. Tschimirov, K.D. Schweinke, D. Augustat, V. Tolstoguzov, Die Nahrung (1983) 27 (7) 659-668.

EP-A-0 588 426 relates to a method for improving the rheological properties of dough and quality of baked products by addition of a yeast derivative, preferably in combination with a reducing agent and/or enzyme preparations having amylase, hemicellulase, oxidoreductase and/or protease activities.

Compared to sulfite, proteases work in a different way since they hydrolyse peptide bonds of gluten. This also lowers the degree of shrinking of dough pieces and gives more regular sizing of biscuits. Nevertheless the action of such proteases is time dependent. This is the major limiting factor in the use of proteases in doughs because biscuit manufacturers need some degree of freedom with regard to resting time of doughs. This is possible with the quick effect of reducing agents like sulfites but is not easy to manage with the continuous action of proteases.

It has been surprisingly found that a new combination of enzymes can enable biscuit manufacturers to mimic the effect of sulfite in dough. According to the present invention a combination is disclosed of a protease which is inactivated by oxidation and an enzyme capable of giving rise to such oxidation. This combination of enzymes can replace the metabisulfite in dough e.g. dough for baking such as in the production of biscuits.

The oxidation sensitive protease is preferably a thioprotease, for example papain or bromelain. The oxidating enzyme preferably produces, an oxidising agent such as H₂O₂ (hydrogen peroxide) which can inactivate the protease after a certain time period. Preferably the enzyme is glucose oxidase, sulfhydryl oxidase or amino acid oxidase. Good results may be obtained with papain, such as from *Carica papaya,* commercially available from Gist Brocades under the trade mark Protease V100, combined with a (eg. fungal) glucose oxidase, preferably from *Aspergillus niger,* commercially available from Gist Brocades under the trade mark Maxazyme GO 1500.

By using a protease that may be only active at the beginning of the dough preparation, shrinking of the dough may be reduced and more regular sizes of baked products, such as biscuits, can be obtained. The action of (or each) protease can then be substantially decreased when the concentration of the oxidizing agent(s) has reached a particular (inactivating) level. Therefore, the required amount of enzyme necessary for the production of sufficient oxidizing agent can be a function of the oxidation stability of the protease, the amount of protease present, the effectiveness of the oxidizing agent and the desired time after which the protease activity should be decreased to a desired level.

The activity of protease (NF) is determined by the hydrolysis of casein at pH 6.0, 40°C for 60 minutes. One NF unit is the amount of enzyme needed to liberate the equivalent of 1 µg tyrosine per hour after precipitation of the remaining proteins with trichloracetic acid.

The activity of oxidases can generally be determined by oxidizing a substrate in a buffer (pH around 5.4) at a temperature around 37°C for 10 minutes. The hydrogen peroxide produced is measured in the presence of horse radish peroxidase and o-dianisidine dihydrochloride. 1 SU is the amount of enzyme needed to consume 0.4 µmole oxygen/minute.

In general, 10⁵ to 10⁹ NF/kg flour, preferably 10⁶ to 10⁸ NF/kg flour of protease is added to (or present in) the dough. Of the enzyme that produces the oxidizing agent e.g. glucose oxidase, 50 to 50000 SU/kg flour, preferably 100 to 2000 SU/kg flour is added to (or is present in) the dough.

Taking glucose oxidase as an example, the activity of glucose oxidase (GOX) is determined by oxidizing glucose (0.11 M) in 0.1 M phtalate buffer (pH 5.4) at 37°C for 10 minutes in the presence of horse radish peroxidase (40 mg/l of POD-II, available from Boehringer Mannheim) and o-dianisidine dichlorhydrate (130 mg/l). 1 SU is the amount of enzyme needed to consume 0.4 µmole oxygen/minute under the conditions of the test.

Sulfhydryl oxidase (SOX) cannot be determined by the above method because hydrogen peroxide reacts with the substrate of SOX (glutathione). Instead, sulfhydryl oxidase activity is determined by measuring the decrease of the substrate glutathione as described by Young and Nimmo, Biochem. J. 130 (1972) 33. One sulfhydryl oxidase unit is equal to an enzyme amount required for depleting 1 µmole of oxygen/minute from a test mixture containing 8 mmol of GSH (glutathione) and 40 mmol of sodium acetate (pH 5.5) at 25°C.

The amount of hydrogen peroxide produced by 1 unit of SOX is about the same as for 1 unit of GOX (SU).

### Use of the Farinograph and its Interpretation

The farinograph measures and records the resistance of a dough during mixing. With this apparatus it is possible to measure the effect of compounds that affect the consistency of a dough, such as metabisulfite and protease. A consistency of about 500 BU (Brabander Units) is a good consistency for bread baking. When the gluten in a dough is hydrolysed by a protease the resulting mixture containing starch and hydrolysed protein has a final consistency of from 100 to 200 BU. For biscuit baking the desired consistency is in between the consistency of a bread dough and of a fully hydrolysed dough, for example preferably from 300 to 400 BU.

The unit DS₁₅ is the decrease in the farinograph curve between the maximum and 15 minutes after the maximum.

The invention will now be described, by illustration only, with reference to the following Examples and drawings, in which:

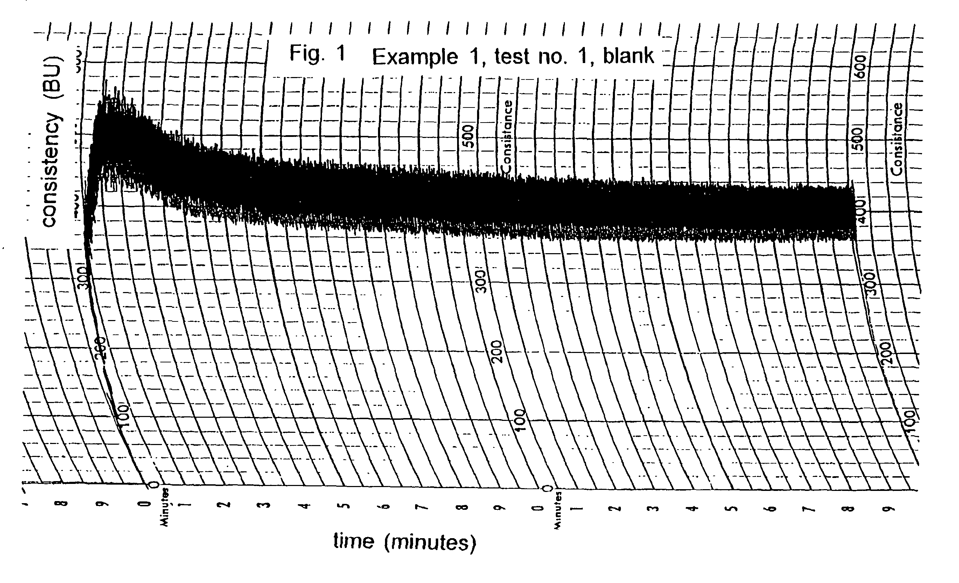

Figure 1 is the farinogram of the dough of test no. 1 of Example 1;

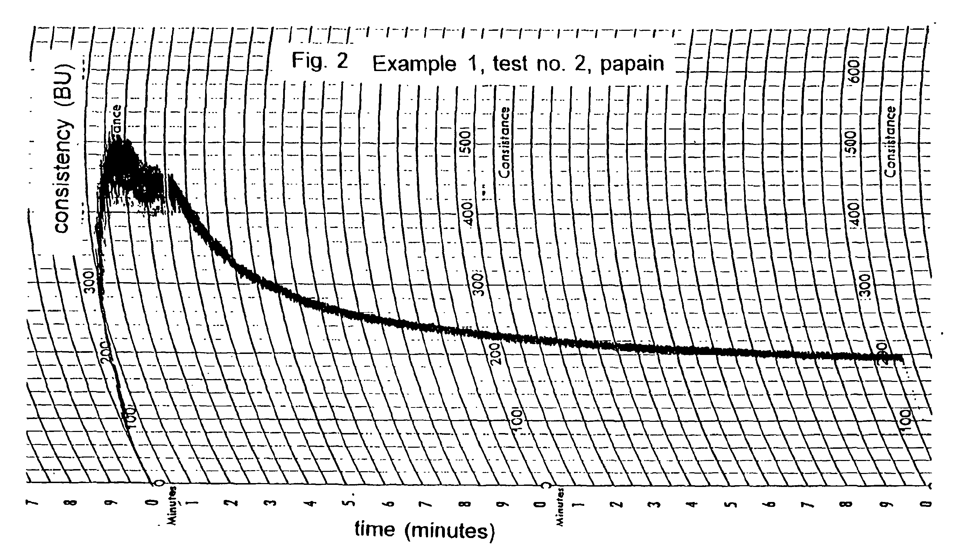

Figure 2 is the farinogram of the dough of test no. 2 of Example 1; and

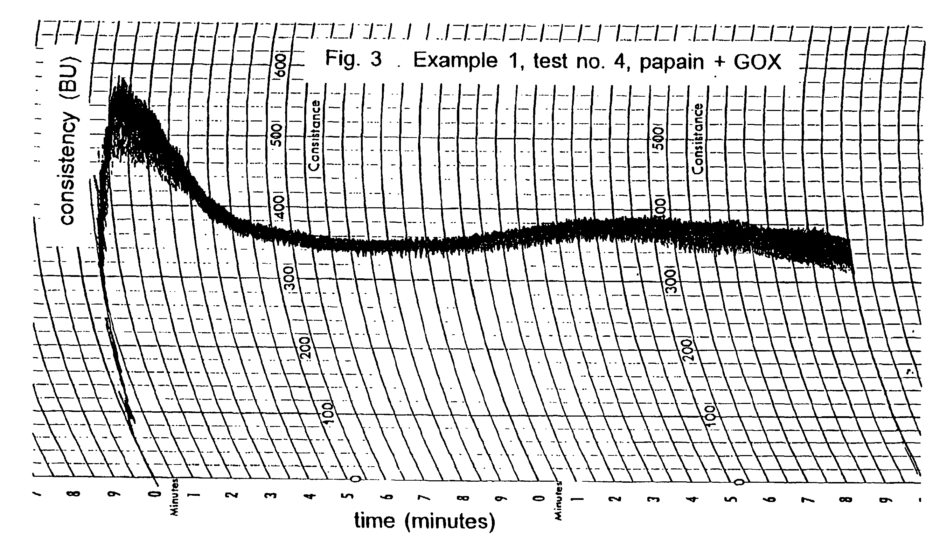

Figure 3 is the farinogram of the dough of test no. 4 of Example 1.

### Example 1

A dough was prepared from a wheat flour by mixing 300 g flour and water (final volume 188 ml) for at least 20 minutes in a farinograph, as a control or with a protease and/or oxidising enzyme. For tests in which GOX was added, the dough was also supplemented with glucose (2 g/kg flour). Various parameters were measured for four doughs, the results of which are shown in the following Table.

**Table 1**

| Test No. | Enzyme(s) | Dose/kg flour | BUₘₐₓ | DS_{15'} | BU_{width} | relates to |
|---|---|---|---|---|---|---|
| 1 | none | 0 | 500 | 100 | 70 | Fig.1 |
| 2 | papain | 14.5 10⁶ NF | 450 | 290 | 10 | Fig.2 |
| 3 | GOX | 1000 SU | 490 | 90 | 80 | |
| 4 | papain + GOX | 14.5 10⁶ NF + 1000 SU | 520 | 130 | 40 | Fig. 3 |
| DS₁₅: degree of softening after 15 minutes in BU (Brabender Units) BU_{width}:the width of the farinogram trace after 15 minutes mixing time. Typically the effect of proteases is to lower this value yielding a narrow trace in the farinogram. | | | | | | |

The results show that glucose oxidase was able to reduce the action of papain. From the figures it is clear that papain hydrolyses the gluten too much so that the resulting dough is not suitable for biscuit baking. The combination of papain and GOX, however, results in a quick decrease in consistency to a desirable level. This level remains more or less constant over time. Prolonged mixing can even result in an increase in consistency, possibly due to indirect oxidation of the gluten by H₂O₂ produced by GOX.

### Example 2

### Influence of glucose concentration

Tests were performed as described in Example 1 test No. 4 but with varied amounts of glucose in the doughs:

**Table 2**

| Test | Glucose g/kg flour | BUₘₐₓ | Mixing time to reach 370 BU |
|---|---|---|---|
| 1 | 0 | 490 | 24' |
| 2 | 2 | 520 | 15' |
| 3 | 10 | 520 | 14' |

The optimal levels of papain and GOX are dependent on the recipe and process conditions. For example the level of glucose influences the activity of GOX as can be seen from the results shown in Table 2.

Glucose is already present in flour (without any supplementation). Therefore the GOX and papain combination can function without added glucose, if necessary.

The results show that glucose addition enables the dough to recover some (consistency) strength sooner. As can be seen from the farinograph, the consistency first decreases and then increases back to a higher value than when GOX alone was present. Probably, only part of hydrogen peroxide produced by GOX is used to stop papain, part is being used also by peroxidases in the flour to strengthen back the gluten network. The effect of glucose is that more hydrogen peroxide is produced which makes the recovery of dough strength occur faster.

### Example 3

### Influence of GOX concentration

Tests were performed as described in Example 1 test No. 4 except that the amounts of GOX added to the dough were varied (papain was present at the level in No. 4 of Example 1).

**Table 3**

| Test No. | GOX addtion SU/kg flour | BUₘₐₓ | DS_{15'} | BU_{width} |
|---|---|---|---|---|
| 1 | 0 | 450 | 290 | 10 |
| 2 | 100 | 470 | 240 | 10 |
| 3 | 500 | 500 | 150 | 20 |
| 4 | 1000 | 520 | 130 | 40 |

The results shown in Table 3 indicate that with more GOX, the higher the consistency of dough.

### Example 4

### Stability of doughs

Tests were performed as described in Example 1 test Nos 2 and 4 and compared with a control of sulfite. Mixing time was 15 minutes in a first step; dough viscosity was measured after 1 h and 5 h resting times. Glucose was present in doughs at 2 g/kg flour.

**Table 4**

| Test No. | Enzyme | BUₘₐₓ | BU₁ₕ | BU₅ₕ | BU_{width, 1h} | DS₁₅ |
|---|---|---|---|---|---|---|
| 1 | papain | 450 | 180 | 180 | 10 | 290 |
| 2 | papain + GOX | 520 | 320 | 240 | 40 | 130 |
| 3 | 200 ppm sulfite | 480 | 340 | 290 | 30 | 100 |

In test No. 3, 200 ppm sulfite was used. Doses in biscuit manufacture may range from 200 to 1200 ppm depending on the products and processes involved. BU₅ₕ will be lower with a higher dose of sulfite.

The effect of GOX in combination with papain was to strengthen the dough enough to stabilize it in a way similar to sulfite.

## Claims

1. An enzyme composition for use in doughs for baking comprising:
i a protease which is at least partially inactivated on oxidation by an oxidizing agent; and
ii an enzyme which produces that oxidizing agent..

2. A composition according to claim 1 wherein the protease is a thioprotease, optionally papain or bromelain.

3. A composition according to claim 1 or 2 wherein the oxidizing agent is H₂O₂.

4. A composition according to any preceding claim wherein the enzyme which produces the oxidizing agent is glucose oxidase, sulfhydryl oxidase or amino acid oxidase.

5. A composition according to any preceding claim wherein the protease is papain obtained from Carica papaya.

6. A composition according to any preceding claim wherein the enzyme in (b) is glucose oxidase obtained from Aspergillus niger.

7. A dough suitable for baking comprising an enzyme composition according to any preceding claim and optionally other dough ingredients.

8. A dough according to claim 7 wherein the protease is present from 10⁶ to 10⁷ NF/kg flour.

9. A dough according to claim 7 or 8 wherein the oxidizing agent produced by the enzyme is H₂O₂ and whereby the enzyme is present from 500 to 1500 SU/kg flour.

10. A method of making a dough suitable for baking, the process comprising admixing the following ingredients:
i a protease that is at least partially inactivated by an oxidising agent;
ii an enzyme which produces that oxidising agent;
iii flour; and
iv water.

11. A method according to claim 10 which comprises adding an enzyme composition according to any of claims 1 to 6 to a dough comprising flour and water.

12. A process for producing a baked product, the process comprising:
i providing a dough which comprises.
a) a protease which is at least partially inactivated on oxidation by an oxidizing agent;
b) an enzyme which produces that oxidizing agent;
c) flour and water; and
ii baking the dough.

13. Use of an enzyme which produces an oxidizing agent that, by oxidation, inactivates a protease for making dough or in the preparation of a baked product.

## Patentansprüche

1. Enzymgemisch zur Verwendung in Teigen zum Backen, enthaltend
(i) eine Protease, die mindestens teilweise durch Oxidation mittels eines Oxidationsmittels inaktiviert wird, und
(ii) ein Enzym, welches jenes Oxidationsmittel bildet.

2. Gemisch nach Anspruch 1, worin die Protease eine Thioprotease, gegebenenfalls Papain oder Bromelain, ist.

3. Gemisch nach Anspruch 1 oder 2, worin das Oxidationsmittel H₂O₂ ist.

4. Gemisch nach einem der vorstehenden Ansprüche, worin das Enzym, welches das Oxidationsmittel bildet, Glucoseoxidase, Sulfhydryloxidase oder Aminosäureoxidase ist.

5. Gemisch nach einem der vorstehenden Ansprüche, worin die Protease Papain ist, das aus Carica papaya erhalten worden ist.

6. Gemisch nach einem der vorstehenden Ansprüche, worin das Enzym gemäß (ii) Glucoseoxidase ist, die aus Aspergillus niger erhalten worden ist.

7. Zum Backen geeigneter Teig, der ein Enzymgemisch nach einem der vorstehenden Ansprüche und gegebenenfalls andere Teigbestandteile enthält.

8. Teig nach Anspruch 7, worin die Protease in einer Menge von 10⁶ bis 10⁷ NF/kg Mehl vorliegt.

9. Teig nach Anspruch 7 oder 8, worin das durch das Enzym gebildete Oxidationsmittel H₂O₂ ist und das Enzym in einer Menge von 500 bis 1500 SU/kg Mehl vorliegt.

10. Verfahren zum Herstellen eines zum Backen geeigneten Teigs, wobei folgende Bestandteile gemischt werden:
(i) Eine Protease die mindestens teilweise durch ein Oxidationsmittel inaktiviert wird,
(ii) ein Enzym, das jenes Oxidationsmittel bildet,
(iii) Mehl und
(iv) Wasser.

11. Verfahren nach Anspruch 10, welches das Zugeben eines Enzymgemisches nach einem der Ansprüche 1 bis 6 zu einem Teig, der Mehl und Wasser enthält, beinhaltet.

12. Verfahren zum Herstellen einer Backware, wobei
(i) ein Teig bereitgestellt wird, enthaltend
a) eine Protease, die mindestens teilweise durch Oxidation mittels eines Oxidationsmittels inaktiviert wird,
b) ein Enzym, das jenes Oxidationsmittel bildet,
c) Mehl und Wasser, sowie
(ii) der Teig gebacken wird.

13. Verwendung eines Enzyms, das ein Oxidationsmittel bildet, welches durch Oxidation eine Protease inaktiviert, zum Herstellen eines Teigs oder bei der Herstellung einer Backware.

## Revendications

1. Composition d'enzymes pour une utilisation dans des pâtes à cuire comprenant :
(i) une protéase qui est au moins partiellement inactivée lors d'une oxydation par un agent oxydant, et
(ii) une enzyme qui produit cet agent oxydant.

2. Composition suivant la revendication 1, dans laquelle la protéase est une thioprotéase, facultativement la papaïne ou la bromélaïne.

3. Composition suivant la revendication 1 ou 2, dans laquelle l'agent oxydant est de l'H₂O₂.

4. Composition suivant l'une quelconque des revendications précédentes, dans laquelle l'enzyme qui produit l'agent oxydant est la glucose oxydase, la sulfhydryle oxydase ou une oxydase d'acide aminé.

5. Composition suivant l'une quelconque des revendications précédentes, dans laquelle la protéase est la papaïne obtenue de Carica papaya.

6. Composition suivant l'une quelconque des revendications précédentes, dans laquelle l'enzyme en (b) est la glucose oxydase obtenue de Aspergillus niger.

7. Pâte appropriée à cuire comprenant une composition d'enzymes suivant l'une quelconque des revendications précédentes, et facultativement d'autres ingrédients de pâte.

8. Pâte suivant la revendication 7, dans laquelle la protéase est présente de 10⁶ à 10⁷ NF/kg de farine.

9. Pâte suivant la revendication 7 ou 8, dans laquelle l'enzyme est présente de 500 à 1500 SU/kg de farine.

10. Procédé de réalisation d'une pâte appropriée à cuire, le procédé comprenant le mélange des ingrédients suivants :
(i) une protéase qui est au moins partiellement inactivée par un agent oxydant;
(ii) une enzyme qui produit cet agent oxydant;
(iii)de la farine; et
(iv) de l'eau.

11. Procédé suivant la revendication 10, qui comprend l'addition d'une composition d'enzymes suivant l'une quelconque des revendications 1 à 6, à une pâte comprenant de la farine et de l'eau.

12. Procédé de production d'un produit cuit, le procédé comprenant :
(i) l'apport d'une pâte qui comprend
(a) une protéase qui est au moins partiellement inactivée lors d'une oxydation par un agent oxydant;
(b) une enzyme qui produit cet agent oxydant;
(c) de la farine et de l'eau; et
(ii) la cuisson de la pâte.

13. Utilisation d'une enzyme qui produit un agent oxydant qui, par oxydation, inactive une protéase pour obtenir une pâte ou dans la préparation d'un produit cuit.
